# EUROPEAN PATENT APPLICATION

(11) **EP 0 934 976 A2**
(43) Date of publication of application: **11.08.1999**
(21) Application number: 99300876.2
(22) Date of filing: 05.02.1999
(51) Int. Cl.: C08L 67/04, C08K 3/00

(54) **Biodegradable moulding compound**

(30) Priority: 06.02.1998 GB 9802612
(71) Applicant: KABUSHIKI KAISHA KOBE SEIKO SHO also known as Kobe Steel Ltd., Kobe 651-0072 (JP); KOBE STEEL EUROPE LIMITED, Guildford, Surrey GU2 5AF (GB)
(72) Inventor: Ives, Peter John, c/o Kobe Steel Europe Ltd., Guildford, Surrey GU2 5AF (GB); Palmer, David Jonathan, c/o Kobe Steel Europe Ltd., Guildford, Surrey GU2 5AF (GB); Woodfine, Barry, c/o Kobe Steel Europe Ltd., Guildford, Surrey GU2 5AF (GB)
(74) Representative: Lewin, John Harvey

(57) **Abstract**

The invention relates to use of a hydroxy carboxylic acid oligomer having a molecular weight of up to 15,000 in a compound for extrusion and/or injection moulding. The invention also relates to a compound for extrusion and/or injection moulding, comprising a hydroxy carboxylic acid oligomer having a molecular weight of up to 15,000, and the use of such a compound for making a shaped article by extrusion and/or injection moulding.

## Description

This invention relates to the composition and use of a hydroxy carboxylic acid based moulding compound capable of being injection moulded into appropriate products, and the products made therefrom. The moulding compound is entirely composed of substances which are either totally biodegradable or naturally occurring materials.

Increasing public awareness of environment issues is helping to promote "environmentally friendly" products. One such product area is items composed of biodegradable plastics. These materials degrade to biomass, carbon dioxide and water under the action of naturally occurring organisms when buried in environments such as soil, compost, sewage sludge and the like. Plastics based on lactic acid, called polylactic acid or polylactide polymers (PLA), are biodegradable in these environments and thus are suitable for use in producing biodegradable items. Similar plastics are based on glycolic acid and other hydroxy carboxylic acids.

However, it is accepted by those skilled in the art that PLA and other similar polymers are only useful for injection moulded products if the molecular weight (mw) of the polymer is high. The lower limit appears to be a mw around 50-70,000 (eg. Jamshidi *et al,* Polymer 29 (1988), pages 2230-2231 or Schwaar, SRI International PEP Review 92-1-4 (1993), pages 1-2). This type of behaviour is not restricted to PLA however. The majority of injection moulding plastics show the same type of mw dependence and generally, only high mw polymers are used in injection moulding.

We have surprisingly been able to formulate a PLA compound using PLA polymers of mw <10,000 (PLA oligomers) which displays good extrusion and injection moulding characteristics and can be readily formed into natural mineral-filled biodegradable products. We have thus sought to provide an injection moulding compound composed of only naturally occurring materials or biodegradable plastics.

The present invention provides use of a hydroxy carboxylic acid oligomer having a molecular weight of up to 15,000 in a compound for extrusion and/or injection moulding. Oligomer molecular weights herein are number average molecular weights and are measured by GPC (gel permeation chromatography).

The invention also provides a compound for extrusion and/or injection moulding, comprising a hydroxy carboxylic acid oligomer having a molecular weight of up to 15,000.

The invention further provides a process for making a shaped article, which comprises extrusion and/or injection moulding of a compound as defined above.

The hydroxy carboxylic acid to form the oligomer is preferably selected from lactic acid and glycolic acid.

The biodegradable plastic may be PLA oligomers of mw <15,000 and preferably in the range 1,000-5,000. Related polymer types such as polyglycolide and copolymers of PLA and/or polyglycolide with other polymers may also be used.

Inclusion of naturally occurring minerals such as chalk, mica, talc, alumina, silica, aluminosilicate, clay and the like may be beneficial at levels of 0-70 wt% of the moulding compound, and preferably in the range 30-60 wt%. The preferred mineral is chalk. Similarly, addition of plant fibres such as sisal, jute, hemp, flax, cellulose, lignin and the like may be beneficial at levels of 0-30 wt%, and preferably 10-20 wt%. The preferred plant fibre is cellulose. It is recognised that animal fibres such as hair and wool may be useful in certain product applications also. Natural and/or biodegradable processing additives such as mould release agents, process stabilisers, nucleation agents, anti-ageing stabilisers and the like are also useful at levels of 0-5 wt%.

The use of PLA oligomers is of benefit for two principal reasons. Firstly, the biodegradation rate should be considerably enhanced at the lower mw of the oligomers in comparison with high mw PLA polymers. Secondly, the use of PLA oligomers rather than polymers eliminates two stages in the PLA polymer production route. PLA polymers are generally produced in three stages: oligomerisation of lactic acid by removing water; depolymerisation of the oligomer to form lactide, a cyclic dimer; and ring-opening polymerisation of lactide to form high mw PLA polymer. Enabling the oligomeric polycondensation products to be used rather than the ring-opening reaction polymers simplifies manufacturing and substantially reduces product cost.

The use of only biodegradable plastic and naturally occurring materials such as plant fibre and minerals enhances the environmentally friendly nature of any injection moulding product. The formulation overcomes any problems associated with recycling of non-degradable plastic alternatives, or their increasingly unacceptable disposal methods such as landfill or incineration. The ability to use the moulding compound in standard injection moulding machines allows the possibility of wide commercial use.

The invention is illustrated by the following Examples.

### EXAMPLES

**Examples 1-4.** PLA oligomer (mw = ~3,500) and chalk (CaCO₃) were mixed in the ratios set out in Table 1 and extruded through a twin screw extruder. At extruder zone temperatures of between 90°C and 160°C, all formulations extruded smoothly. The melt viscosity of the blends was determined by parallel plate rheometry and the results are presented in Table 1.

**Table 1.**

| Experiment | Oligomer : chalk Melt viscosity at 120°C (Pa.s) | |
|---|---|---|
| 1 | 100 : 0 | 0.4 |
| 2 | 50 : 50 | 15 |
| 3 | 35 : 65 | 50 |
| 4 | 20 : 80 | 20,000 |

**Examples 5-12**. Materials used in these experiments are PLA oligomer (mw = ~,3500), PLA polymer (mw = ~210,000), chalk (CaCO₃), cellulose fibre, beeswax. Blends of compositions detailed in Table 2 were mixed and extruded and injection moulded as indicated. Processing temperatures of between 90°C and 160°C were used for the extruder barrel and injection moulding machine barrel. Surface appearance and ease of injection moulding were found to be substantially improved when the basic formulation included beeswax release agent or PLA polymer.

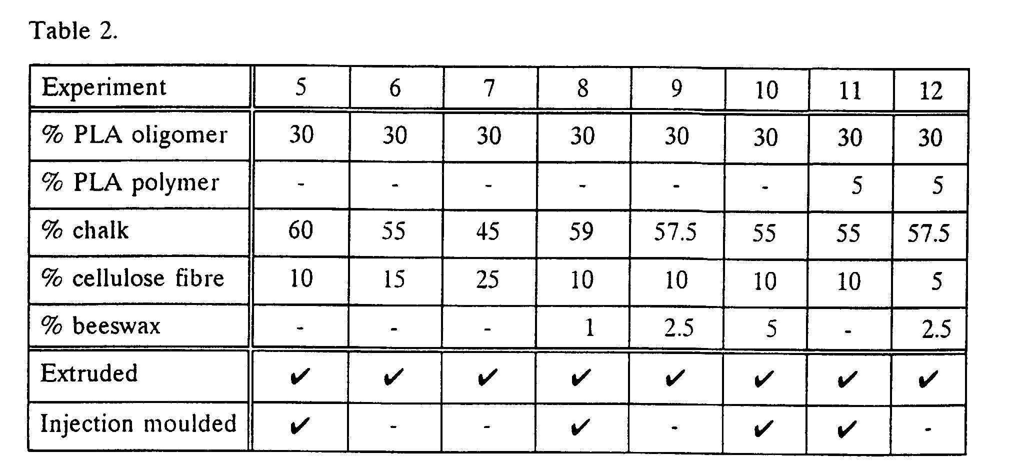

## Claims

1. Use of a hydroxy carboxylic acid oligomer having a molecular weight of up to 15,000 in a compound for extrusion and/or injection moulding.

2. Use according to claim 1, in which the oligomer is a homopolymer or copolymer of lactic acid and/or glycolic acid.

3. Use according to claim 2, in which the oligomer is a homopolymer of lactic acid.

4. Use according to any of claims 1 to 3, in which the molecular weight is up to 10,000.

5. Use according to claim 4, in which the molecular weight is from 1,000 to 5,000.

6. Use according to any of claims 1 to 5, in which the compound contains up to 70 wt%, preferably from 30 to 60 wt%, of a mineral filler.

7. Use according to claim 6, in which the mineral filler is selected from calcium carbonate, mica, talc, alumina, silica, aluminosilicate and clay.

8. Use according to any of claims I to 7, in which the compound contains up to 30 wt%, preferably from 10 to 20 wt%, of plant fibres.

9. Use according to claim 8, in which the plant fibres are selected from sisal, jute, hemp, flax, cellulose and lignin.

10. A compound for extrusion and/or injection moulding, comprising a hydroxy carboxylic acid oligomer having a molecular weight of up to 15,000.

11. A compound according to claim 10, in which the oligomer is a homopolymer or copolymer of lactic acid and/or glycolic acid.

12. A compound according to claim 11, in which the oligomer is a homopolymer of lactic acid.

13. A compound according to any of claims 10 to 12, in which the molecular weight is up to 10,000.

14. A compound according to claim 13, in which the molecular weight is from 1,000 to 5,000.

15. A compound according to any of claims 10 to 14, which contains up to 70 wt%, preferably from 30 to 60 wt%, of a mineral filler.

16. A compound according to claim 15, in which the mineral filler is selected from calcium carbonate, mica, talc, alumina, silica, aluminosilicate and clay.

17. A compound according to any of claims 10 to 16, which contains up to 30 wt%, preferably from 10 to 20 wt%, of plant fibres.

18. A compound according to claim 17, in which the plant fibres are selected from sisal, jute, hemp, flax, cellulose and lignin.

19. A process for making a shaped article, which comprises extrusion and/or injection moulding of a compound according to any of claims 10 to 18.

20. A shaped article made from a compound according to any of claims 10 to 18.
